# EUROPEAN PATENT APPLICATION

(11) **EP 4 524 612 A1**
(43) Date of publication of application: **19.03.2025**
(21) Application number: 24192271.5
(22) Date of filing: 01.08.2024
(51) Int. Cl.: G01S 7/487, G01S 17/10, G01S 17/89

(54) **INFORMATION PROCESSING APPARATUS**

(30) Priority: 14.09.2023 JP 2023149531
(71) Applicant: Kabushiki Kaisha Toshiba, Tokyo 105-0023 (JP)
(72) Inventor: SAI, Akihide, Minato-ku, Tokyo (JP); KATAGIRI, Hisaaki, Minato-ku, Tokyo (JP); KONDO, Satoshi, Minato-ku, Tokyo (JP)
(74) Representative: Hoffmann Eitle

(57) **Abstract**

An information processing apparatus (1) has a histogram generator (11) to generate a histogram indicating a relationship between a light reception time and a light reception frequency based on reflected light from an object (20), a first peak detector (12) to detect a peak of the light reception frequency of the histogram, and a judgement unit (13) to judge whether there is a light propagation interference factor including at least one of fog, mist, haze, rain, and snow. Based on the histogram and the light reception time of the peak, the judgement unit (13) judges whether there is the light propagation interference factor based on the light reception time of the peak and a degree of change in the light reception frequency of the histogram between before and after the light reception time of the peak. A deletion unit (14) deletes the light reception frequency obtained based on the light propagation interference factor, and extracts light reception frequency after the deletion. The deletion unit (14) deletes the light reception frequency of the light reflected or scattered by the particles, and of ambient light from the histogram. A second peak detector (15) detects a peak of the light reception frequency curve obtained after the deletion. A distance measurement unit (16) measures the distance to the object (20) based on the peak detected by the second peak detector (15) without being influenced by a factor such as fog or rain. An image processor (9) generates three-dimensional data including the object (20).

## Description

### FIELD

One or more examples described herein relate generally to an information processing apparatus.

### BACKGROUND

As the LiDAR (Light Detection and Ranging) technology has been improving, it is expected that the importance of the recognition and classification techniques relating to three-dimensional data, as well as two-dimensional images, will increase in the future.

Fog, rain, or the like may be a major cause of deterioration in performance of systems for performing monitoring using a camera or a sensor such as a LiDAR sensor, assist or automation of various human works. In order to change the control of a system depending on weather, it is indispensable to quickly judge the state of environment such as fog or rain at as a low cost as possible by a simple method. The performance of a LiDAR sensor may be significantly deteriorated by fog or rain itself. Infrared light is often used for LiDAR sensors, but infrared light is likely to be absorbed or scattered by moisture. Therefore, the distance measured using LiDAR techniques is limited under foggy or rainy conditions.

Existing LiDAR devices often have a multi-echo function for selecting a true reflected light peak from a plurality of reflected light peaks. However, if the intensity of light reflected on fog or rain particle is large, the multi-echo function does not normally work, and the distance measuring accuracy is decreased.

### BRIEF DESCRIPTION OF THE DRAWINGS

FIG. 1 is a block diagram of a distance measuring system including an information processing apparatus according to an example.
FIG. 2 is a block diagram showing an internal configuration of an information processor included in the information processing apparatus according to the example.
FIG. 3 is a diagram schematically showing a state that a light scanner emits light to an object for scanning.
FIG. 4 is a block diagram showing a schematic configuration of a light receiver of a light detector for receiving one pixel.
FIG. 5 is a flowchart showing a processing operation performed by the information processing apparatus according to the example.
FIG. 6 is a diagram showing an example of a curved line generated based on the light reception frequency of each bin of a histogram.
FIG. 7 is a diagram showing an example in which a threshold value comparator detects a first time and a second time using a threshold value that is smaller than a threshold value shown in FIG. 6.
FIG. 8 is a diagram for explaining a processing operation performed by a fitting unit.
FIG. 9 shows the shape of a curbed line formed based on the light reception frequency of each bin of a histogram when there is a light propagation interference factor.
FIG. 10A shows a result of a first experiment in which a distance was measured with a fog elimination function being switched on or off under a foggy environment in which the visibility was 40 m.
FIG. 10B shows a result of an experiment in which a distance was measured with a rain elimination function being switched on or off under a rainy environment in which the amount of rainfall was 50 mm/h.
FIG. 11 shows how a second experiment was performed.
FIG. 12 shows a result of the second experiment.

### DETAILED DESCRIPTION

An example of the present invention is an information processing apparatus comprising:
a histogram generator configured to generate a histogram indicating a relationship between a light reception time and a light reception frequency based on a plurality of received signals including reflected light from an object;
a first peak detector configured to detect a peak of the light reception frequency of the histogram; and
a judgement unit configured to judge whether there is a light propagation interference factor including at least one of fog, mist, haze, rain, and snow based on the histogram and the light reception time of the peak,
the judgement unit judging whether there is the light propagation interference factor based on the light reception time of the peak and a degree of change in the light reception frequency of the histogram between before and after the light reception time of the peak.

Hereinafter, one or more examples of an information processing apparatus, a distance measuring apparatus, a distance measuring system, and an information processing method will be described with reference to the drawings. Although major components of the information processing apparatus, the distance measuring apparatus, and the distance measuring system will be described below, the information processing apparatus, the distance measuring apparatus, and the distance measuring system may include components and functions that are not illustrated in the drawings or described herein. The following descriptions do not exclude the presence of components or functions that are not illustrated or described.

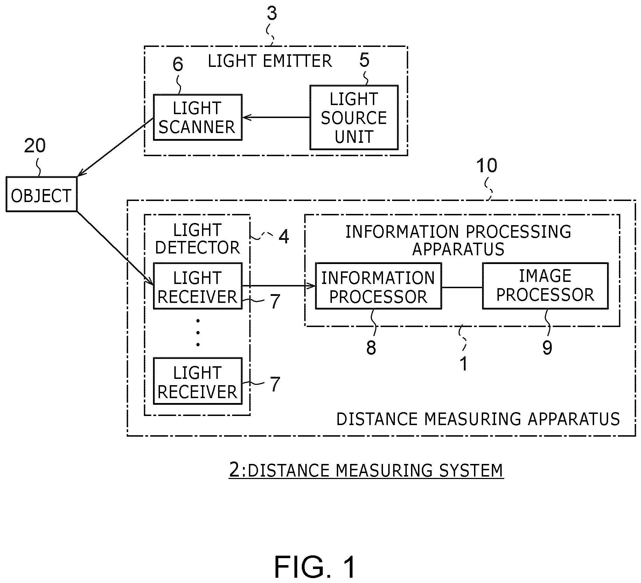

FIG. 1 is a block diagram of a distance measuring system 2 including an information processing apparatus 1 according to an example. The distance measuring system 2 shown in FIG. 1 includes the information processing apparatus 1, a light emitter 3, and a light detector 4. The information processing apparatus 1 combined with the light detector 4 will be called a distance measuring apparatus 10 herein. Otherwise, the distance measuring system 2 including the information processing apparatus, the light detector 4 and the light emitter may be called the distance measuring apparatus 10.

The light emitter 3 includes a light source unit 5 and a light scanner 6. The light source unit 5 intermittently emits light pulse signals linearly or two-dimensionally.

The light scanner 6 scans the light pulse signals emitted from the light source unit 5 by changing the propagation direction of the light pulse signal one-dimensionally or two-dimensionally. This enables the emission of the light pulse signals toward an object 20 existing in a three-dimensional space. The object 20 may be either a motionless object or a moving object. If the light source unit 5 is a surface-emitting unit, the light scanner 6 may be omitted.

The light detector 4 detects reflected light signals of the light pulse signals emitted to the object 20. The light detector 4 includes a plurality of light receivers 7. The light detector 4 receives the reflected light signals that enter a two-dimensional region, for example. A minimum unit in the two-dimensional region of the light detector 4 for receiving the reflected light signals is called "pixel" herein. The light detector 4 includes more than one light receivers 7 configured to receive reflected light signals for each pixel.

Based on the reflected light signals received by the light detector 4, the information processing apparatus 1 measures the distance to the object 20 and generates three-dimensional data including distance information of the object 20. The information processing apparatus 1 may generate a two-dimensional image including luminance information around the object 20. The information processing apparatus 1 includes an information processor 8 for measuring the distance to the object 20, and an image processor 9 for generating the three-dimensional data including the distance information of the object 20.

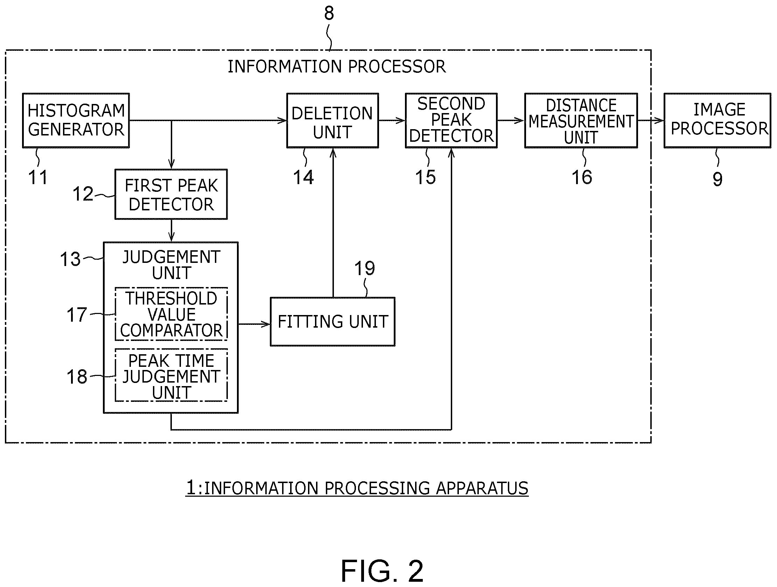

FIG. 2 is a block diagram showing an internal configuration of the information processor 8 included in the information processing apparatus 1 according to the example. As shown in FIG. 2, the information processor 8 according to the example includes a histogram generator 11, a first peak detector 12, a judgement unit 13, a deletion unit 14, a second peak detector 15, and a distance measurement unit 16.

The histogram generator 11 generates a histogram indicating a relationship between the light reception time and the light reception frequency based on received light signals including reflected light signals from the object 20. The histogram is a graph showing the light reception frequency for each of a plurality of bins representing different points in time. The histogram generator 11 generates a histogram for each pixel received by the light receiver 7. The histogram generator 11 may generate a histogram for a plurality of pixels.

The first peak detector 12 detects a peak of the light reception frequency in the histogram generated by the histogram generator 11. In more detail, the first peak detector 12 detects the light reception frequency of one of the bins, for which the light reception frequency is the greatest, as a peak of the histogram.

The judgement unit 13 judges whether there is a light propagation interference factor including at least one of fog, mist, haze, rain, and snow based on the histogram generated by the histogram generator 11 and the light reception time of the peak detected by the first peak detector 12. "Fog" is a weather term indicating that the visibility is less than 1 km. "Mist" is a weather term indicating that the visibility is 1 km or more and less than 10 km. "Haze" is not a weather term, but indicates a state where the visibility is limited due to water droplets, dirt, dust, smoke, or the like. The light propagation interference factor determined by the judgement unit 13 includes not only moisture in the atmosphere but also various particles constituting dirt and dust. The particles of water or the like that correspond to the light propagation interference factor may absorb the light emitted from the light emitter 3, or reflect or scatter the light emitted from the light emitter 3.

If the judgement unit 13 judges that there is a light propagation interference factor, the deletion unit 14 deletes the light reception frequency obtained based on the light propagation interference factor from the histogram generated by the histogram generator 11, and extracts light reception frequency after the deletion. The histogram generated by the histogram generator 11 includes light reception frequency of the light reflected on the object 20, light reception frequency of light reflected or scattered by the particles corresponding to the light propagation interference factor, and light reception frequency of ambient light. The deletion unit 14 deletes the light reception frequency of the light reflected or scattered by the particles corresponding to the light propagation interference factor and the light reception frequency of the ambient light from the histogram. The deletion unit 14 thus generates a light reception frequency curve that does not include the light reception frequency obtained based on the light propagation interference factor.

The second peak detector 15 detects a peak of the light reception frequency curve obtained after the deletion performed by the deletion unit 14. The second peak detector 15 thus detects a peak of the light reception frequency curve that does not include the light reception frequency obtained based on the light propagation interference factor. If the judgement unit 13 judges that there is no light propagation interference factor, the second peak detector 15 detects the same peak as the one detected by the first peak detector 12.

The distance measurement unit 16 measures the distance to the object 20 based on the peak detected by the second peak detector 15. The peak is detected without being influenced by the light propagation interference factor such as fog or rain, and therefore the distance to the object 20 can be accurately measured.

The image processor 9 generates three-dimensional data including the object 20 based on the distance to the object 20 measured by the distance measurement unit 16. The three-dimensional data may be three-dimensional point cloud data in which the locations in the measured points are three-dimensionally expressed, or a distance image in which the distances are represented by colors. As the number of light emissions from the light emitter 3 increases, the number of point clouds included in the three-dimensional data increases, and as the number of light emissions decreases, the number of point clouds decreases. If the interval between light emissions is constant, the horizontal or vertical distance between point clouds is determined by a distance obtained by cutting the viewing angle of the light detector 4 with a constant angular width. If the angular width of the viewing angle is constant, the number of point clouds included in the object 20 increases as the distance to the object 20 becomes shorter, and decreases as the distance becomes longer.

The judgement unit 13 judges whether there is a light propagation interference factor based on the light reception time of the peak and the degree of change in the light reception frequency in the histogram between before and after the light reception time of the peak. As a specific example, the judgement unit 13 includes a threshold value comparator 17 and a peak time judgement unit 18. The threshold value comparator 17 detects a period of time in which the light reception frequency of the histogram is equal to or greater than a predetermined threshold value. The peak time judgement unit 18 judges whether there is a light propagation interference factor based on the period of time detected by the threshold value comparator 17 and the light reception time of the peak detected by the first peak detector 12.

As a more specific example, the threshold value comparator 17 detects a first time at which the light reception frequency of the histogram generated by the histogram generator 11 matches a predetermined threshold value and a second time that is after the first time by the period of time detected by the threshold value comparator 17. The peak time judgement unit 18 compares a first period that is from the first time to the time of the peak and a second period that is from the time of the peak to the second time, and judges that there is a light propagation interference factor if the second period is longer than the first period by a predetermined length.

The threshold value described above is a fixed value set based on an average of the sum of the light reception frequencies in all bins in the histogram, for example. Alternatively, the threshold value may be a variable value that changes in accordance with the light reception frequency of the peak detected by the first peak detector 12. The threshold value comparator 17 may change the threshold value a plurality of times to change the length of the period from the first time to the second time. In this case, the judgement unit 13 may judge whether the second period is longer than the first period for each of the threshold values, and finally judge whether there is a light propagation interference factor.

The information processing apparatus 1 according to the example may further include a fitting unit 19, which generates a function that fits a curve generated based on the light reception frequency of each bin of the histogram generated by the histogram generator 11. More specifically, the fitting unit 19 generates a curve of a first function that fits a first curved line generated based on the light reception frequency of each bin of the histogram from the first time detected by the threshold value comparator 17 to the time of the peak, and a curve of a second function that fits a second curved line generated based on the light reception frequency of each bin of the histogram from the time of the peak to the second time.

Based on the difference between the first curved line and the second curved line generated based on the light reception frequency of each bin of the histogram and the curve of first function and the curve of the second function generated by the fitting unit 19, the deletion unit 14 generates a third curved line including light reception frequency after the deletion.

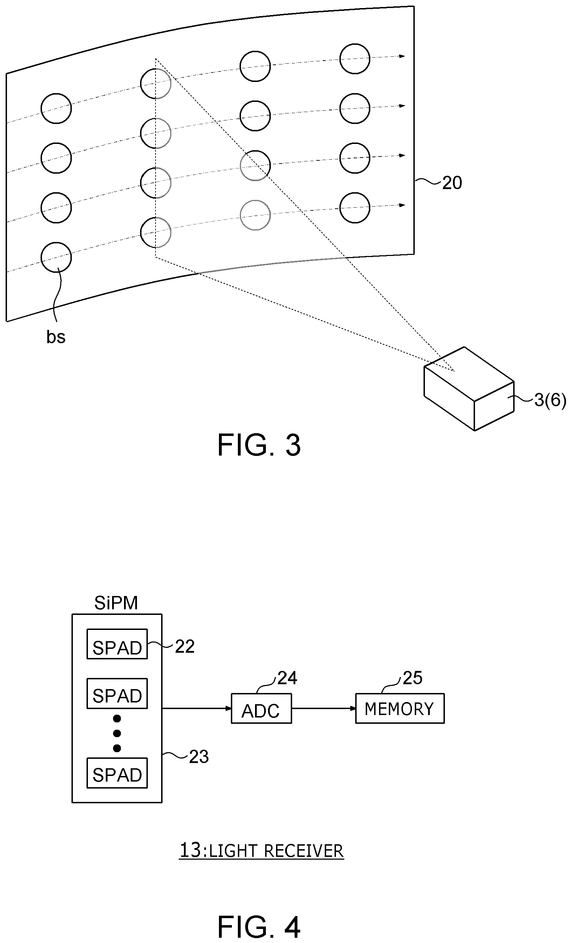

FIG. 3 is a diagram schematically showing that the light scanner 6 emits light to the object 20 for scanning. The light scanner 6 scans a plurality of light beams emitted simultaneously from the light source unit 5 including a plurality of light sources arranged one-dimensionally or two-dimensionally. Each circle in FIG. 3 schematically represents a beam spot bs of each laser light. The laser lights emitted to the object 20 are reflected on the object 20 and received by the light detector 4. The light detector 4 receives the reflected laser lights from the object 20 in the units of pixels. The light detector 4 includes the light receivers 7 corresponding to a plurality of pixels.

FIG. 4 is a block diagram showing a schematic configuration of the light receiver 7 of the light detector 4 for detecting one pixel. The light receiver 7 includes a silicon photo-multiplier (SiPM) 23 having a plurality of single photon avalanche diodes (SPADs) 22, an analog digital converter (ADC) 1, and a memory 25.

Each of the SPAD 22 is capable of detecting light in the unit of one photon. When a photon is detected, the output voltage of the SPAD 22 decreases. Hereinafter, the detection of light by the SPAD 22 may be called "fire" of the SPAD 22. The SiPM 23 includes the plurality of SPADs 22, and as the intensity of light received by the light receiver 7 increases, the number of the fired SPADs 22 increases and the output voltage of the SiPM 23 decreases. Therefore, the ADC 24 may output a multi-valued digital signal corresponding to the received light signal by analog-to-digital converting the output voltage of the SiPM 23. The digital signal outputted by the ADC 24 may be called "RAW data."

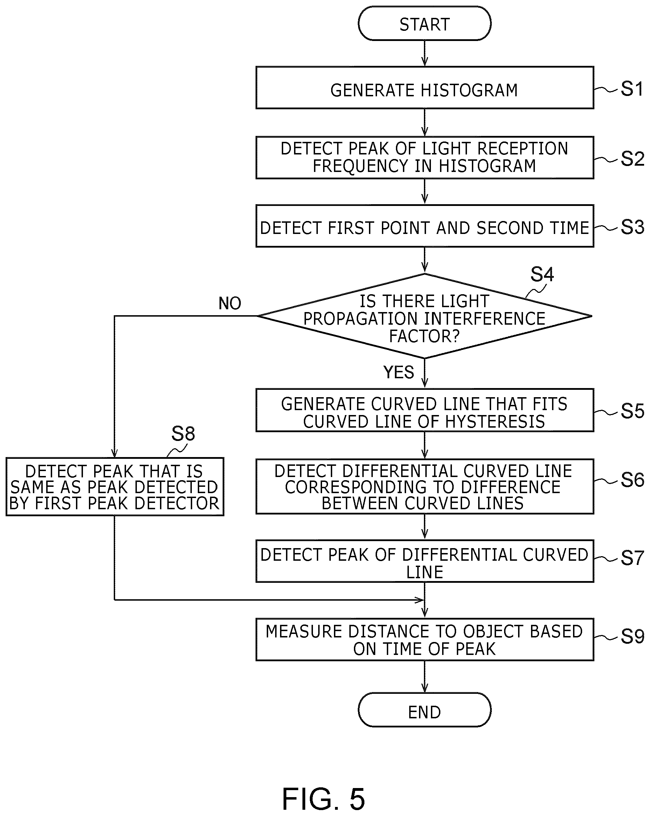

FIG. 5 is a flowchart showing a processing operation of the information processing apparatus 1 according to the example. The flowchart shown in FIG. 5 starts after the light receiver 7 starts detecting light in synchronization with the intermittent emissions of light pulse signals from the light emitter 3.

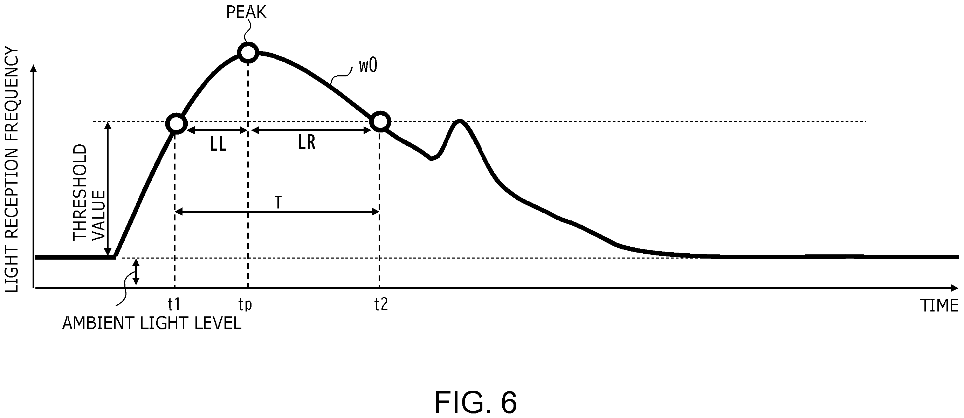

First, the histogram generator 11 generates a histogram based on signals received by the light receiver 7 (step S1). Next, the first peak detector 12 detects a peak of the light reception frequency in the histogram (step S2). FIG. 6 is a diagram showing an example of a curved line w0 generated based on the light reception frequency of each bin of the histogram. In the curved line w0 shown in FIG. 6, the light reception frequency is the greatest (peak) at a bin of the light reception time tp. In the example of FIG. 6, the first peak detector 12 detects the light reception time tp corresponding to the peak of the curved line w0.

Thereafter, the threshold value comparator 17 compares the light reception frequency of the histogram with a threshold value, and detects a first time and a second time at which the light reception frequency matches the threshold value (step S3). In the example of FIG. 6, the threshold value comparator 17 detects a first time t1 and a second time t2.

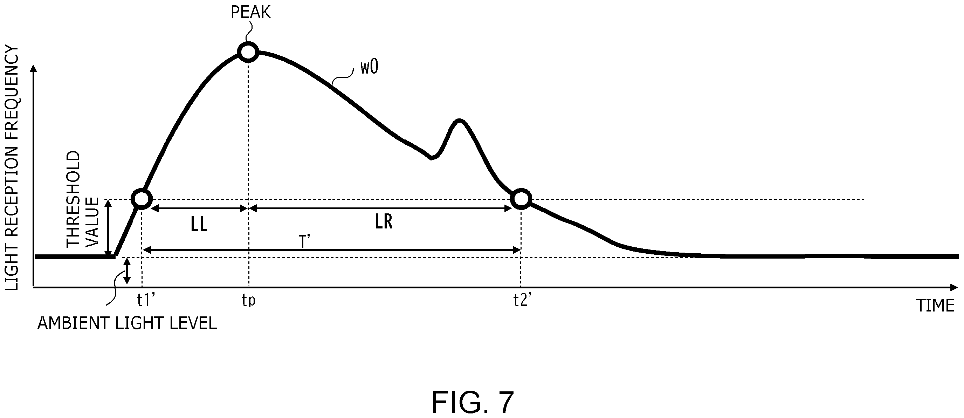

The first time t1 and the second time t2 may change depending on the signal level of the threshold value. FIG. 7 shows an example in which the threshold value comparator 17 detects a first time t1' and a second time t2' based on a threshold value, the signal level of which is smaller than that of the threshold value shown in FIG. 6. The first time t1' in FIG. 7 is earlier than the first time t1, and the second time t2' is later than the second time t2. Therefore, the period T between the first time t1 and the second time t2 is shorter than the period T' between the first time t1' and the second time t2'.

Subsequently, the peak time judgement unit 18 compares a first period LL between the first time t1 and the time tp of the peak with a second period LR between the time tp of the peak and the second time t2, and judges whether the second period LR is longer than the first period LL by equal to or more than a predetermined length (step S4), that is, whether there is a light propagation interference factor.

If the second period LR is judged to be longer than the first period LL by equal to or more than the predetermined length, it is judged that there is a light propagation interference factor. In the examples of FIGs. 6 and 7, the peak time judgement unit 18 judges that the second period LR is longer than the first period LL by equal to or more than the predetermined length. The predetermined length, which corresponds to a difference between the second period LR and the first period LL, may be arbitrarily determined. For example, the predetermined length may be equal to or more than 10% of the first period LL or the second period LR.

According to the verification by the inventors, the shape of a curved line representing the light reception frequency of light reflected or scattered by water in the atmosphere, or particles other than those of water of the light propagation interference factors, which form dirt and and dust, is the same as the shape of a gamma distribution curve. If the second period LR is longer than the first period LL by a predetermined length, the light propagation interference factor exists, and the shape of the curved line representing the light reception frequency of each bin after the peak of the histogram fits the gamma distribution curve.

If there is no light propagation interference factor, the shape of the curved line representing the light reception frequency of each bin after the peak of the histogram fits the shape of a gaussian distribution curve.

Thus, the peak time judgement unit 18 may judge that there is a light propagation interference factor if the curved line in the second period LR fits a gamma distribution curve, and that there is no light propagation interference factor if the curved line in the second period LR fits a gaussian distribution curve.

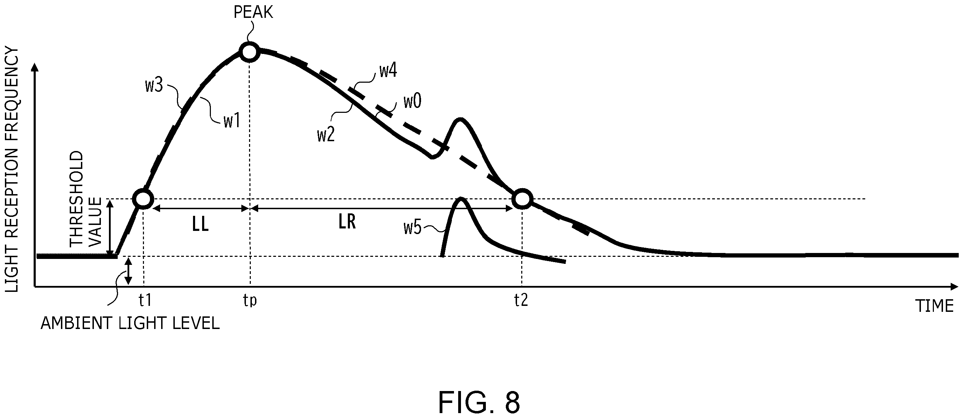

If it is judged that there is a light propagation interference factor in step S4, the fitting unit 19 generates a curved line representing a function, which fits the curved line generated based on the light reception frequency of each bin of the histogram (step S5). FIG. 8 is a diagram for explaining a processing operation of the fitting unit 19. The fitting unit 19 separately performs the fitting operation for the first period LL before the light reception time tp at the peak and for the second period LR after the light reception time tp at the peak. The reason for the separate operations for the first period LL and the second period LR is that the shape of the curved line differs between a first curved line w1 generated based on the light reception frequency of each bin in the first period LL of the histogram and a second curved line w2 generated based on the light reception frequency of each bin in the second period LR of the histogram.

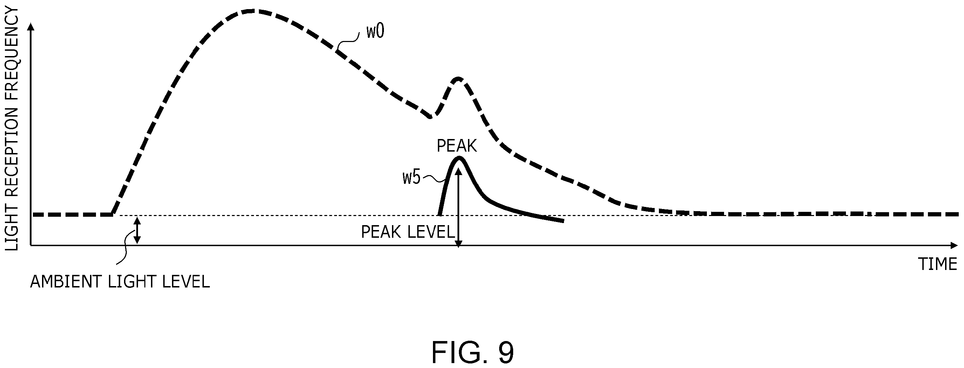

FIG. 9 shows the shape of a curved line w0 formed based on the light reception frequency of each bin of the histogram when there is a light propagation interference factor. As shown in FIG. 9, the maximum peak of the curved line w0 is caused by the light propagation interference factor, and the second maximum peak is caused by reflected light from the object 20.

As shown in FIG. 8, the fitting unit 19 generates a curved line w3 of a first function that is a linear function or a quadratic function, has a shape near the first curved line w1, and passes two points, a crossing position with the threshold value (at a first time t1) and a peak position (at a time tp), in the first period LL. Similarly, the fitting unit 19 generates a curve line w4 of the second function that is a linear function or a quadratic function, has a shape near the second curved line w2, and passes two points, the peak position (at the time tp) and a crossing position with the threshold value (at a second time t2), in the second period LR.

Thus, the fitting unit 19 performs a fitting operation to generate the curved line w3 of the first function in the first period LL and the curved line w4 of the second function in the second period LR. As may be understood from FIG. 8, the curved line w0 generated from the light reception frequency of each bin of the original histogram considerably differs from the curved lines w3 and w4 generated by the fitting unit 19 around a time at which the reflected light from the object 20 is received (around a time t3).

Next, the deletion unit 14 detects a differential curved line that corresponds to a difference between the curved line generated based on the light reception frequency of each bin of the histogram and the curved lines of the first function and the second function (step S6). The differential curved line that is detected is, for example, a curved line (third curved line) w5 shown in FIG. 8, which represents the light reception frequency that includes the reflected light from the object 20 but does not include light from the light propagation interference factor.

Thereafter, the second peak detector 15 detects a peak of the third curved line w5 as a second peak (step S7) based on the difference detected in step S5. The second peak is used for measuring the distance to the object 20.

If it is judged in step S4 that there is no light propagation interference factor, the fitting unit 19 and the deletion unit 14 perform nothing, and the second peak detector 15 detects the first peak detected by the first peak detector 12 as the second peak (step S8).

Subsequently, the distance measurement unit 16 measures the distance to the object 20 based on the second peak (step S9).

### (First Experiment)

The inventors have performed an experiment ("first experiment") for comparing a success rate in distance measuring between a case where the operations are performed by the judgement unit 13 and the deletion unit 14 and a case where no operation is performed by the judgement unit 13 and the deletion unit 14. In the following descriptions, when the judgement unit 13, the fitting unit 19, and the deletion unit 14 perform the respective operations, the state is expressed as "fog (rain) elimination is on," and when the judgement unit 13, the fitting unit 19, and the deletion unit 14 do not perform any operation, the state is expressed as "fog (rain) elimination is off."

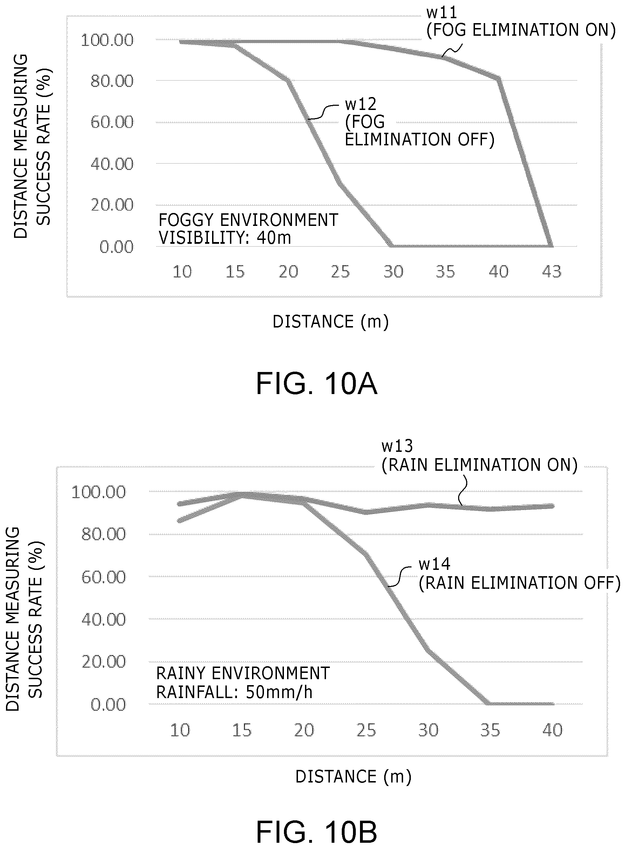

FIG. 10A shows a result of the first experiment in which a distance was measured with the fog elimination being switched on or off under a foggy environment in which the visibility was 40 m. FIG. 10B shows a result of an experiment in which the distance was measured with the rain elimination being switched on or off under a rainy environment in which the amount of rainfall was 50 mm/h.

The horizontal axis in each of FIGs. 10A and 10B represents the distance to the object 20 [m], and the vertical axis represents the success rate [%]. FIG. 10A shows a curved line w11 when the fog elimination was on and a curved line w12 when the fog elimination was off. FIG. 10B shows a curved line w13 when the rain elimination was on and a curved line w14 when the rain elimination was off.

As may be understood from FIGs. 10A and 10B, the success rate for measuring the distance of more than 15 m to the object 20 is considerably improved when the operations of the judgement unit 13, the fitting unit 19, and the deletion unit 14 are performed in both the foggy environment and the rainy environment. In the foggy environment, the success rate decreases when the distance is greater than 40 m even if the operations of the judgement unit 13, the fitting unit 19, and the deletion unit 14 are performed. However, in the rainy environment, the success rate may be maintained for the distance greater than 40 m if the operations of the judgement unit 13, the fitting unit 19, and the deletion unit 14 are performed.

### (Second Experiment)

The inventors have performed an experiment ("second experiment") in which a plurality of objects 20 were disposed with a constant interval from the distance measuring apparatus 10, and it was judged until which object 20 a distance image may be generated when the fog elimination is switched on or off.

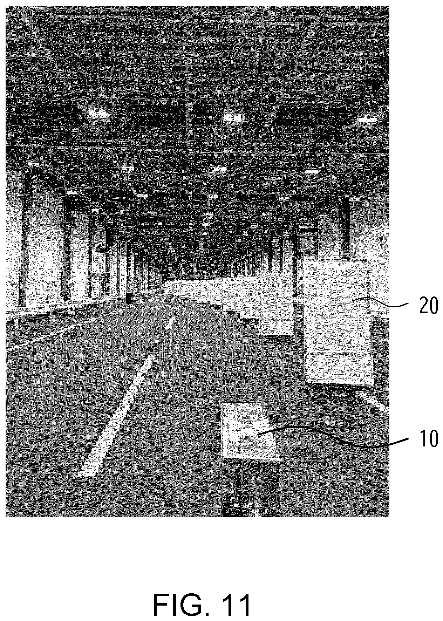

FIG. 11 shows how the second experiment was performed. In FIG. 11, the distance measuring apparatus 10 is disposed at a closer side, and the objects 20 are disposed toward a distant side at a constant interval from the distance measuring apparatus 10. The objects 20 are reflecting plates that reflect light emitted from the light emitter 3 of the distance measuring apparatus 10. The second experiment was performed under a foggy environment in which the visibility was 40 m.

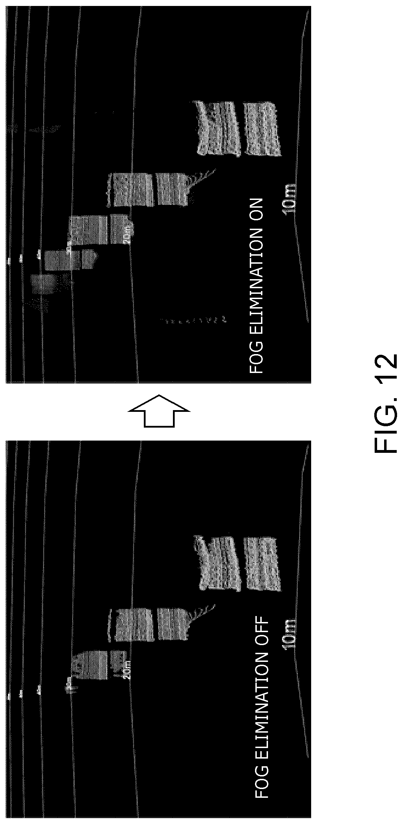

FIG. 12 shows a result of the second experiment. The left side of FIG. 12 shows three-dimensional data groups obtained as a result of the second experiment performed when the fog elimination was off, and the right side of FIG. 12 shows three-dimensional data groups obtained as a result of the second experiment when the fog elimination was off. As may be understood from FIG. 12, light from a distant object 20 may be received more reliably and the measurable distance may be longer when the fog elimination was on than when the fog elimination was off.

As described above, in the example, a histogram is formed based on the signals received by the light receiver 7, and whether there is a light propagation interference factor is judged based on the peak position of the histogram and the shape of a curved line generated from the light reception frequency in the histogram. If it is judged that there is a light propagation interference factor, a curved line showing the light reception frequency caused by light reflected from the object 20 is generated by removing the light reception frequency caused by the light propagation interference factor from the light reception frequency of each bin of the histogram, and the peak of the curved line is detected to measure the distance to the object 20. As a result, even if there is a light propagation interference factor in the environment, a distance measuring operation may be highly accurately performed. The curved line showing the light reception frequency caused by the light reflected from the object 20 may be easily detected by obtaining a difference between a curved line generated based on the light reception frequency in each bin of the histogram and a curved line that represents a linear function or a quadratic function fitted to the aforementioned curved line.

At least a part of the information processing apparatus 1, the distance measuring apparatus 10, and the distance measuring system 2 of the example described above may be formed by hardware, or software. If software is used, a program for performing at least a portion of the functions of the information processing apparatus 1, the distance measuring apparatus 10, and the distance measuring system 2 may be stored in a recording medium such as a flexible disk or a CD-ROM, and the program may be read by a computer to be executed. The recording medium is not limited to a detachable one such as a magnetic disk or an optical disk, but may be a fixed-type recording medium such as a hard disk or a semiconductor memory.

A program for performing at least a portion of the functions of the information processing apparatus 1, the distance measuring apparatus 10, and the distance measuring system 2 may be distributed via a communication line (including wireless communication) such as the Internet. Such a program may be encrypted, modulated, or compressed and sent via a wired or a wireless communication line such as the Internet, or sent in a recording medium.

The disclosure is not limited to the example described above, and may include various modifications those skilled in the art would conceive. The effects of the disclosure are not limited to those described above, either. The accompanying claims and their equivalents are intended to cover various additions, substitutions and partial deletions as would fall within the scope and spirit of the disclosures.

## Claims

1. An information processing apparatus (1) comprising:
a histogram generator (11) configured to generate a histogram indicating a relationship between a light reception time and a light reception frequency based on a plurality of received signals including reflected light from an object;
a first peak detector (12) configured to detect a peak of the light reception frequency of the histogram; and
a judgement unit (13) configured to judge whether there is a light propagation interference factor including at least one of fog, mist, haze, rain, and snow based on the histogram and the light reception time of the peak,
the judgement unit (13) judging whether there is the light propagation interference factor based on the light reception time of the peak and a degree of change in the light reception frequency of the histogram between before and after the light reception time of the peak.

2. The information processing apparatus (1) according to claim 1, further comprising:
a deletion unit (14) configured to perform deletion of light reception frequency relating to the light propagation interference factor from the histogram and extract light reception frequency after the deletion when the judgement unit (13) judges that there is the light propagation interference factor;
a second peak detector (15) configured to detect a peak of the light reception frequency after the deletion; and
a distance measurement unit configured to measure a distance to the object based on the peak detected by the second peak detector (15).

3. The information processing apparatus (1) according to claim 2, further comprising an image processor configured to generate three-dimensional data including the object based on the distance to the object measured by the distance measurement unit.

4. The information processing apparatus (1) according to claim 2, wherein the judgement unit (13) includes:
a threshold value comparator (17) configured to detect a period of time in which the light reception frequency of the histogram is equal to or greater than a predetermined threshold value; and
a peak time judgement unit (18) configured to judge whether there is the light propagation interference factor based on the period of time and the light reception time of the peak.

5. The information processing apparatus (1) according to claim 4,
wherein the threshold value comparator (17) detects a first time at which the light reception frequency of the histogram matches the predetermined threshold value, and a second time after the period of time from the first time,
wherein the peak time judgement unit (18) compares a first period from the first time to the light reception time of the peak and a second period from the light reception time of the peak to the second time, and judges that there is the light propagation interference factor when the second period is longer than the first period by a predetermined length.

6. The information processing apparatus (1) according to claim 5, further comprising a fitting unit (19) configured to generate a curve of a first function that fits a first curved line generated based on the light reception frequency of each bin of the histogram from the first time to the light reception time of the peak and a curve of a second function that fits a second curved line generated based on the light reception frequency of each bin of the histogram from the light reception time of the peak to the second time,
wherein the deletion unit (14) generates a third curved line including the light reception frequency after the deletion based on a difference between the first curved line and the second curved line and the curve of first function and the curve of the second function.

7. The information processing apparatus (1) according to claim 6,
wherein the first function and the second function are a linear function or a quadratic function,
wherein the fitting unit (19) generates the curve of the first function that passes a first intersection between the first curved line and the predetermined threshold value at the first time and the peak, the curve of the first function being similar to the first curved line between the first intersection and the peak, and the curve of the second function that passes the peak and a second intersection between the second curved line and the predetermined threshold value at the second time, the curve of the second function being similar to the second curved line between the peak and the second intersection.

8. The information processing apparatus (1) according to claim 7, wherein the second peak detector (15) detects a peak of the third curved line.

9. The information processing apparatus (1) according to claim 4, wherein the predetermined threshold value is a fixed value set based on an average of a sum of light reception frequencies in all bins in the histogram.

10. The information processing apparatus (1) according to claim 4, wherein the predetermined threshold value changes in accordance with the light reception frequency of the peak detected by the first peak detector (12).

11. The information processing apparatus (1) according to claim 4,
wherein the threshold value comparator (17) changes the predetermined threshold value to several values to detect a plurality of periods of time,
wherein the peak time judgement unit (18) judges whether there is the light propagation interference factor based on the plurality of periods of time and the light reception time of the peak.

12. The information processing apparatus (1) according to claim 2, wherein the second peak detector (15) detects a peak that is the same as the peak detected by the first peak detector (12) when the judgement unit (13) judges that the light propagation interference factor is not present.

13. The information processing apparatus (1) according to claim 2, wherein the judgement unit (13) judges that there is the light propagation interference factor when a curved line generated based on the light reception frequency of each bin of the histogram after the light reception time of the peak is a gamma distribution curve.

14. The information processing apparatus (1) according to claim 2, wherein the judgement unit (13) judges that the light propagation interference factor is not present when a curved line generated based on the light reception frequency of each bin of the histogram after the light reception time of the peak is a gaussian distribution curve.

15. The information processing apparatus (1) according to claim 2, wherein the deletion unit (14) deletes the light reception frequency relating to the light propagation interference factor and light reception frequency relating to ambient light from the histogram.
